# EUROPEAN PATENT SPECIFICATION

(11) **EP 4 595 003 B1**
(45) Date of publication and mention of the grant of the patent: **28.10.2026**
(21) Application number: 23768907.0
(22) Date of filing: 18.09.2023
(51) Int. Cl.: G06T 7/55, G06V 10/14

(54) **APPARATUSES AND METHODS FOR POLARIZATION BASED SURFACE NORMAL IMAGING**
VORRICHTUNGEN UND VERFAHREN ZUR POLARISATIONSBASIERTEN OBERFLÄCHENNORMALEN BILDGEBUNG
APPAREILS ET PROCÉDÉS DE FORMATION D'IMAGES AVEC NORMALES À LA SURFACE BASÉE SUR LA POLARISATION

(30) Priority: 26.09.2022 EP 22197639
(43) Date of publication of application: 06.08.2025
(73) Proprietor: Sony Semiconductor Solutions Corporation, Atsugi-shi, Kanagawa 243-0014 (JP); University of Zurich, 8050 Zurich (CH)
(72) Inventor: MUGLIKAR, Manasi, 8050 Zürich (CH); MOEYS, Diederik Paul, 70327 Stuttgart (DE); SCARAMUZZA, Davide, 8050 Zürich (CH)
(74) Representative: 2SPL Patentanwälte PartG mbB
(86) International application number: PCT/EP2023/075650
(87) International publication number: WO 2024/068335

(56) References cited:
- SHIHAO ZOU ET AL: "Human Pose and Shape Estimation from Single Polarization Images", ARXIV.ORG, CORNELL UNIVERSITY LIBRARY, 201 OLIN LIBRARY CORNELL UNIVERSITY ITHACA, NY 14853, 15 August 2021 (2021-08-15), XP091034361
- BA YUNHAO ET AL: "Deep Shape from Polarization", August 2020, TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 554 - 571, XP047594108

## Description

### Field

The present disclosure relates to apparatuses and methods for surface normal estimation based on polarization information.

### Background

Shihao Zou et al.: "Human Pose and Shape Estimation from Single Polarization Images" discloses a deep learning method for estimating human pose and shape from a single polarization image. A two-stage process first infers the surface normal from the image, which is then used to reconstruct a clothed 3D human shape.

Ba Yunhao et al.: "Deep Shape from Polarization" introduces a deep learning approach for the Shape from Polarization (SfP) problem. It combines physics-based models as priors within a neural network. This hybrid method is shown to outperform previous physics-only techniques on a new, challenging dataset of polarization images.

Surface normal estimation is a useful tool to perform depth estimation and 3D modeling of objects and scenes in many applications, such as augmented reality (AR) and virtual reality (VR), holograms, 3D television, robotics, high-speed defect inspection, and scene analysis for automotive scenarios. Since reflected light has a polarization state corresponding to a surface from which it is reflected, polarization information can be used to obtain surface normal estimation for a 3D model. Such a method is known as Shape from Polarization (SfP).

Traditional frame-based SfP requires a camera to capture an image for fixed, predefined angles of a polarizer in front of the camera. Polarized images can be captured at full resolution of the camera but at different timestamps. Such "division of time" approaches are temporally limited in a speed of image capture by a frame rate of the camera. While this method would perform well for stationary scenes, their performance would not translate well to dynamic scenes. To overcome this, other approaches such as mosaicking have been developed, wherein micro-optical polarizers are directly integrated onto an array of pixels within the sensor plane of the camera imaging system. Each pixel within a group of pixels, usually four, is assigned a different predefined angle for its corresponding polarizer. Polarization information corresponding to all four polarization angles can then be captured simultaneously, but at one quarter of the original resolution. Most commercial polarization sensors use this approach, also known as a "division of focal plane". As with many imaging applications and depth estimation techniques, there is an inevitable speed vs. accuracy tradeoff. Highly accurate methods are not fast, especially with moving objects.

SfP methods in general also have high error rates, particularly with the mean angular error of surface normal estimation, since the underlying physics based on the Fresnel equations is among the most optically complex of all computer vision problems. SfP methods are also susceptible to noise since the captured light intensity is reduced by 50 percent.

Thus, there is a demand for improved concepts for surface normal estimation with polarization information.

### Summary

This demand is addressed by apparatuses and methods in accordance with the independent claims. Possibly advantageous embodiments are addressed by the dependent claims.

The present disclosure relates to an apparatus for shape measurement of a scene, the apparatus comprising a rotatable linear polarizer configured to pass light from the scene at a first rotation angle of the linear polarizer and to subsequently pass light from the scene at a second rotation angle of the linear polarizer. The apparatus further comprises an event-based vision sensor, EVS, configured to detect a first set of events associated with the passed light of the first rotation angle of the linear polarizer and to subsequently detect a second set of events associated with the passed light of the second rotation angle of the linear polarizer. The apparatus further comprises a shape estimation processor configured to compute surface normal information 132 of the scene based on the first and second set of events and the corresponding first and second rotation angles of the linear polarizer.

The present disclosure also relates to a method for shape measurement of a scene. The method comprises passing light from the scene at a first rotation angle of a rotatable linear polarizer and then detecting, with an EVS, a first set of events associated with the passed light of the first rotation angle of the linear polarizer. It further comprises passing light from the scene at a second rotation angle of the linear polarizer and then detecting, with the EVS, a second set of events associated with the passed light of the second rotation angle of the linear polarizer. It further comprises computing surface normal information 132 of one or more objects in the scene based on the first and second set of events and the corresponding first and second rotation angles of the linear polarizer.

### Brief description of the Figures

Some examples of apparatuses and/or methods will be described in the following by way of example only, and with reference to the accompanying figures, in which
- Fig. 1: shows an apparatus for polarization-based surface normal measurement according to a first embodiment;
- Fig. 1A: depicts a spherical coordinate system, wherein a surface normal unit vector, n, is determined by the zenith angle, *θ*, and the azimuth angle, *φ.*
- Fig. 2: shows a method for polarization-based surface normal measurement according to a first embodiment;
- Fig. 3: shows an apparatus for polarization-based surface normal measurement according to a second embodiment;
- Fig. 4: shows a method for polarization-based surface normal measurement according to a second embodiment;
- Fig 5.: shows a powered gear configured to rotate in connection with another gear with a polarizer film in its center;

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

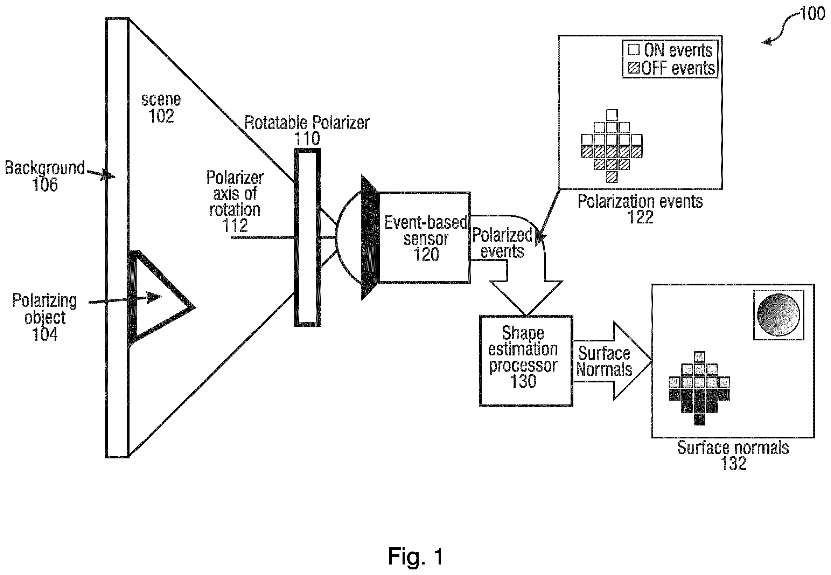

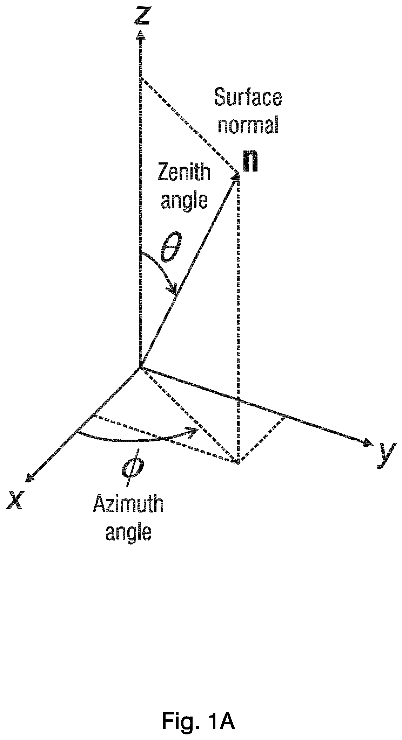

**Fig. 1** schematically illustrates an apparatus 100 for shape measurement of a scene 102 based on the present disclosure.

Apparatus 100 for shape measurement of the scene 102 comprises a rotatable linear polarizer 110, an event-based sensor (EVS) 120 behind the linear polarizer 110, and a shape estimation processor 130 downstream to the EVS 120.

The scene 102 may be a static scene or a dynamic scene with motion in a field of view of the apparatus 100 or the EVS 120. The scene 102 may be shaped or structured 3-dimensionally (3D). In other words, the scene 102 may comprise a background 106 and one or more objects or structures 104 in a foreground. For example, the scene 102 may comprise a Lambertian or non-Lambertian surface (e.g., reflective surfaces, transparent glass, etc). By way of this 3D structure of the scene 102, incident light is reflected back to the apparatus 100 comprising the rotatable linear polarizer 110 and the EVS 120 with different polarizations - depending on a surface or shape of the reflecting object 104.

The linear polarizer 110 is an optical filter that lets light waves of a specific polarization pass or to be transmitted while blocking light waves of other polarizations. A linear polarizer is able to effectively manipulate the polarization of a light signal, the orientation of an electric field for an electromagnetic wave.

An event-based vision camera is also known as an event-based vision sensor (EVS) or a dynamic vision sensor (DVS). The EVS 120 refers to an imaging sensor that responds to local changes in light intensity. Pixels of an EVS 120 operate independently and asynchronously. This property allows every pixel to generate an event exactly at the point in time when its illumination changes, leading to a very fast response time; the latency typically lies in the order of tens of microseconds. An increase in brightness may trigger a so called ON-event, a decrease may trigger an OFF-event.

Signal processing circuitry downstream to the EVS 120 may act as the shape estimation processor 130. Information related to the rotatable linear polarizer 110 and the EVS 120 may be provided as input to the shape estimation processor 130 for shape measurement of the scene 102. Shape estimation processor 130 may be implemented by means of hardware and/or software. For example, shape estimation processor 130 may be implemented by specifically programmed general purpose computers, digital signal processors (DSPs), graphics processing units (GPUs), application-specific integrated circuits (ASICs), etc.

The rotatable linear polarizer 110 is configured to pass light from the scene 102 at a first rotation angle of the linear polarizer 110 and to subsequently pass light from the scene 102 at a second rotation angle of the linear polarizer 110. Thus, the rotatable linear polarizer 110 is configured to subsequently pass light from the scene 102 at a plurality of rotation angles of the linear polarizer 110. The rotatable linear polarizer 110 may periodically filter polarization information of the scene 102.

That is, in a rotating state, the rotatable linear polarizer 110 may rotate clockwise or counterclockwise. A full rotation of the linear polarizer 110 covers rotation angles from 0° to 360°. The first rotation angle may be any rotation angle between 0° and 360°. The second rotation angle may also be any rotation angle between 0° and 360° but different from the first rotation angle. The skilled person having benefit from the present disclosure will appreciate that a full rotation of linear polarizer 110 will generally not only cover two different rotation angles but many different continuous or discrete rotation angles.

A polarizing material of the linear polarizer 110 may be an absorptive material comprising absorptive polymer complexes, such as iodine-doped polyvinyl alcohol chains or other polymer complexes, optionally with one or more dopants, to enhance an absorption of radiation polarized according to the direction to the complexes. Alternatively, the material of the linear polarizer 110 may be a reflective material comprising a metallic wire grid or other structures configured to reflect one or more polarization states of light. Further, the material of the linear polarizer 110 may be a beam-splitting polarizer material based on the principles of Fresnel reflection, a birefringent polarizer material, or a dichroic polarizer material. The material of the linear polarizer 110 may also be a thin-film polarizer material, which may comprise a special optical coating applied on a glass substrate.

The linear polarizer 110 may span a 2-dimensional (2D) plane. An outer perimeter of the linear polarizer 110 may be rotationally symmetric with respect to a rotation axis 112 perpendicular to the 2D plane spanned by the linear polarizer 110. Examples of rotationally symmetric shapes are circular or polygonal. The material of the linear polarizer 110 may also have a 3D form, which may include a curved surface.

The linear polarizer 110 may be installed, such that the linear polarizer 110 can be rotated about its rotation axis 112. The rotation axis 112 may correspond to or be parallel to an optical axis of the EVS 120, for example. For this purpose, the linear polarizer 110 may be coupled with an actuator or rotator configured to cause the linear polarizer 110 to rotate. The actuator and its interaction with the linear polarizer 110 may come in various example implementations. For example, the actuator may comprise an electric drive/motor. The electric drive/motor may be configured to rotate the linear polarizer 110 via a gear or a belt powered by the electric drive/motor. In other embodiments, a rotor of the electric drive/motor may act as a rotation axis of the linear polarizer 110. The electric drive/motor may be electronically connected to the EVS 120 or the shape estimation processor 130, such that the set of events 122 detected by the EVS 120 is recorded together with the corresponding rotation angle of the linear polarizer 110.

In other embodiments of the present disclosure, the apparatus 100 may also comprise a rotatable circular polarizer or rotatable wave plate in addition to the linear polarizer, to further customize polarization information to be recorded in the form of events by the EVS 120. Other embodiments of the apparatus 100 may comprise multiple rotatable linear and/or circular polarizers. The skilled person having benefit from the present disclosure will appreciate that there are numerous methods to manipulate the polarization of a light signal to obtain polarization-based information.

The EVS 120 is configured to detect a first set of events associated with the passed light of the first rotation angle of the linear polarizer 110 and to subsequently detect a second set of events associated with the passed light of the second rotation angle of the linear polarizer 110. Thus, the EVS 120 is configured to subsequently detect a plurality of sets of events associated with the passed light of the corresponding rotation angles of the linear polarizer 110.

In other words, as light is continuously being reflected from the scene 102 to within the field of view of the EVS 120, the linear polarizer can be configured to continuously rotate. When the linear polarizer 110 is positioned at a first rotation angle, a portion of a light signal reflected from the scene 102 can pass through the linear polarizer 110, depending on whether its polarization components are aligned with the first rotation angle, while the rest will not pass. The passed light having a first polarization state then causes a change in light intensity, to which a set of pixels of the EVS 120 responds by producing a first set of events. Then, when the linear polarizer 110 is positioned in the second rotation angle, a portion of a light signal reflected from the scene 102 can pass through the linear polarizer 110, depending on whether its polarization components are aligned with the second rotation angle, while the rest will not pass. The passed light having a second polarization state then causes a change in light intensity, to which a set of pixels of the EVS 120 responds by producing a second set of events.

In this setup, the first set of events of the EVS 120 is linked to the first rotation angle of the linear polarizer 110, while the second set of events of the EVS 120 is linked to the second rotation angle of the linear polarizer 110. The skilled person having benefit from the present disclosure will appreciate that a full (360°) rotation of linear polarizer 110 will generally not only cover two different rotation angles but many different continuous or discrete rotation angles. Thus, a full rotation of the linear polarizer 110 may generally result in many different sets of events, each corresponding to a different rotation angle of the linear polarizer 110.

Given the linear polarizer 110 rotating in front of the EVS 120 and a polarized incoming light signal, the light intensity passing through the linear polarizer 110 will vary according to how much the polarization components of the light signal align with the linear polarizer 110. The light intensity passing through the linear polarizer 110 will also vary according to the amount of light being reflected off one or more objects or surfaces 104 in the scene 102. These two factors will determine the intensity of light within each pixel of the EVS 120, wherein each pixel may trigger an event to be stored as event information once a predefined threshold for a change in intensity has been met.

More specifically, an EVS generates an event *eₖ =* (**x***ₖ, tₖ, pₖ*) at time *tₖ* when a logarithmic brightness at the pixel **x***ₖ* = (*xₖ, yₖ*)^{T} increases or decreases by predefined threshold *C: L*(**x***ₖ, tₖ*) - L(**x***ₖ*, *tₖ -* Δ*tₖ*) *= p*ₖ*C,* where *pₖ* ∈ {-1, +1} denotes the sign (polarity) of the brightness change, and Δ*tₖ* is the time since the last event at the same pixel location.

The EVS 120 exhibits a significant advantage in efficiency compared to a conventional camera detector that continuously records the intensity of a light signal for each pixel within a pixel array. EVS pixels only record information based on a change in intensity beyond a predefined threshold, enabling information of the scene 102 to be recorded and transferred to the shape estimation processor 130 with a significantly reduced amount of input data. This enables the shape estimation processor 130 to perform computations related to shape estimation more quickly.

An EVS is normally used for dynamic scenes since a static scene would not provide any changes in light intensity. However, with a linear polarizer rotating in front of the EVS, partially polarized light reflected off a static object will lead to a varying transmission through the linear polarizer depending on its rotation angle. As such, polarization information regarding the static object can be detected in the form of events. While event-based sensors by themselves are only capable of detecting dynamic objects or scenes, such a setup with a rotatable polarizer in front of an EVS enables polarization-based information to be detected in the form of events for both dynamic and static scenes.

The shape estimation processor 130 is configured to compute surface normal information 132 of the scene 102 based on the first and second set of events and the corresponding first and second rotation angles of the linear polarizer 110.

In other words, the shape estimation processor 130 is configured to estimate a shape of an object 104 in the scene 102 based on polarization information related to the object. Such a method of computational imaging is known as Shape from Polarization (SfP). The shape estimation processor 130 is configured to perform SfP by computing information related to surface normals 132 of an object or surface. The skilled person will appreciate that a normal to a non-flat surface at a point P on the surface is a vector perpendicular to the tangent plane to that surface at P. For example, a surface normal may be a unit vector that is perpendicular to a surface at a specific spot. Therefore, different surface normals for different points P on the surface of scene 102 will yield information about the 3D shape of the scene 102. It makes use of the polarization information of light that is created when unpolarized light is reflected off an object to be imaged. Since natural scenes mostly have common light sources emitting unpolarized light, information regarding objects can be determined by an SfP analysis of the linear polarization upon reflection.

When initially unpolarized light is reflected off objects, it becomes partially linear polarized due to the orientation of the molecular electron charge density interacting with the electromagnetic field of the incident light. This applies to both dielectrics and metals. The polarization information of a light signal can include both the polarization direction of light and the degree to which it has become polarized. Various SfP methods use this information differently, often depending on whether the reflection is diffuse, wherein the light rays are scattered into many different angles, or specular, wherein the light rays are reflected to a single outgoing direction.

The degree to which an unpolarized light signal has become polarized is described by its degree of polarization (DOP), which quantifies how much of the total power of a light signal is polarized. Unpolarized light, such as a light signal emitted from common lighting sources, has a DOP of zero, while partially polarized light, such as a light signal reflected off an object, has a DOP between zero and one. Unpolarized light leads to the same amount of light intensity transmitted through a linear polarizer, regardless of its rotation angle. For partially polarized light, there exist parallel and perpendicular directions of the polarizer that correspond to a maximal transmission and a minimal transmission. A light signal with a larger difference between I*ₘₐₓ* and I*ₘᵢₙ* has a greater DOP, so a given threshold of a change in light intensity programmed into the EVS 120 can communicate information related to the DOP. The DOP can be calculated based in the following equation. $DOP = \frac{{I}_{max} - {I}_{min}}{{I}_{max} + {I}_{min}}$

The shape estimation processor 130 is configured to compute an orientation of one or more surface normals of a portion of the scene based on a change in intensity of passed light between the first and second rotation angles of the linear polarizer that triggered the EVS to output an event associated with the portion.

The orientation of the one or more surface normals may be found in the context of a spherical coordinate system. The DOP of a previously unpolarized light signal upon reflection from an object carries information related to the reflection angle, *θ*. As depicted in Fig. 1A, the reflection angle can be labeled as the zenith angle, *θ*, between a viewing direction and a surface normal. Besides the zenith angle and surface normal, an azimuth angle can also be determined, defined as the angle of projection of the surface normal onto an image plane relative to a reference. While the DOP carries information related to the zenith angle, the orientation of polarization of the light signal carries information related to the azimuth angle. Given both angles at a given point, a surface normal for the given point can be determined. The surface normal information 132 may include the surface normal of multiple points of an object in the scene, which may be used in a computation of the shape estimation processor 130 to perform a reconstruction of the object. The multiple points may be more highly concentrated along a boundary, a convexity, or curvature of an object.

Shape estimation processor 130 is configured to compute this shape information based on the different sets of events, each set corresponding to a rotation angle of the linear polarizer 110. For this purpose, the shape estimation processor 130 may have an input for the sets of events coming from EVS 120 and an input for the corresponding rotation angle of linear polarizer 110. The linear polarizer 110 may be directly connected to the shape estimation processor 130 or to the EVS 120 in order to automatically record the rotation angle of the linear polarizer. Based on these inputs the surface normal information 132 of the scene 102 may be computed. This may be done in various ways.

To obtain a formal relationship between the DOP and the reflection angle, *θ*, one can make use of the Fresnel equations, which can describe the reflection and transmission of linear polarized light when incident on the surface of an object, polarized parallel or perpendicular to the angle of incidence. Using equations related to the degree of polarization, the maximum and minimum intensity, and indices of refraction, together with the Fresnel equations, a relationship between the degree of polarization of light and the reflection angle, *θ*, can be derived. The relationship between the DOP and the reflection angle, *θ*, is different depending on whether reflection is diffuse dominant or specular dominant.

The DOP for diffuse dominant reflection is given below. $DOP = \frac{{\left(n-\frac{1}{n}\right)}^{2} {sin}^{2} θ}{2 + 2 {n}^{2} - {\left(n+\frac{1}{n}\right)}^{2} {sin}^{2} θ + 4 cos θ \sqrt{{n}^{2} - {sin}^{2} θ}}$

This equation can be rearranged to obtain a closed-form estimation of *θ*, so there is no ambiguity for the reflection angle in the case of diffuse reflection. Also, the dependence of the DOP on the refractive index *n* is weak compared to its dependence on the zenith angle *θ*. As such, it is computationally less challenging to compute surface normal vectors of a Lambertian surface. Given the DOP, this formula can be used to find the direction of the surface normal within an expected range of error.

The DOP for specular dominant reflection is given below. $DOP = \frac{2 {sin}^{2} θ cos θ \sqrt{{n}^{2} - {sin}^{2} θ}}{{n}^{2} - {sin}^{2} θ - {n}^{2} {sin}^{2} θ + 2 {sin}^{4} θ}$

This equation offers two solutions for *θ*, leading to an ambiguity for the reflection angle in the case of specular reflection. Even with a weak dependence of the DOP on the refractive index n, the zenith angle *θ* for specular reflection can only be determined up to a large ambiguity.

Surfaces that cause light rays to reflect in many different directions, or in a diffuse manner, are also known as Lambertian surfaces, which are usually matte or have rough edges. An important property of Lambertian surfaces is that the brightness appears uniform from any viewing direction, which makes it easier to estimate the shape of 3D Lambertian objects from multiple views. The reflection angle of the surface normal can also be determined based on the DOP in closed form.

Objects that cause light to reflect in the same direction, or in a specular manner, are non-Lambertian objects, which are shiny or transparent objects, including metals, mirrors, or glass. An important property of non-Lambertian surfaces is that its brightness varies greatly, depending on the viewing direction, which makes it more difficult to estimate the 3D shape. This poses a significant challenge, whereby traditional depth sensors relating to structured light or time of flight fail. As shown above, the DOP cannot be uniquely determined for non-Lambertian objects and must be accompanied by additional information. This poses a crucial challenge for numerous applications. Particularly in autonomous navigation, an agent would want to avoid running into a glass building.

Shape from Polarization (SfP), also known as 3D reconstruction from polarization information, can be used for estimating the shape of objects with non-Lambertian surfaces. The shape estimation processor 130 as part of apparatus 100 enables a faster approach to shape reconstruction using an events-plus-polarization approach, due to the high time resolution and low latency of event sensors. Such an approach enables a high-speed scanning of non-Lambertian surfaces, leading to a high-speed capture of surface normal information 132 from a scene 102 and surface normal reconstruction without compromising the spatial resolution. As such, a fast and dense shape estimation of non-Lambertian surfaces using the principles of SfP and a rotating polarizer is made possible. A high dynamic range of the EVS also provides an advantage related to the motion of objects in the scene 102.

The shape estimation processor 130 may be configured to compute equations relating to Jones parameters or Stokes parameters and perform computation involving Jones or Mueller calculus, which may include calculating the DOP of a light signal reflected off an object 104 in the scene 102. Information related to zenith and azimuthal angles of a surface normal within a spherical coordinate system may be calculated. A zenith angle of a surface normal may correspond to an angle of reflection off the object 104 and may be partially determined by polarization information related to the DOP. An azimuthal angle of a surface normal may correspond to the orientation of polarization of the light signal and may be partially determined by polarization information related to the rotation angle of the polarizer 110. The zenith and azimuthal angles of a surface normal may each be calculated by information provided by the rotatable linear polarizer 110 and the EVS 120. The orientation of a surface normal vector may be determined by its corresponding zenith angle, *θ*, and azimuth angle, *φ*.

The surface normal information 132 may comprise one or more 2-dimensional arrays of pixels representing a map of polarization-based events 122. Each array of pixels may correspond to a rotation angle of the linear polarizer 110. Information related to the degree of polarization may be determined on a pixel-by-pixel basis, wherein a predetermined pixel generates an ON-event in one array of pixels corresponding to one rotation angle of the linear polarizer 110 and the predetermined pixel generates an OFF-event in another array of pixels corresponding to another rotation angle. A greater difference in rotation angles of the linear polarizer 110 between the ON and OFF-event for the pixel may provide data corresponding to the degree of polarization of the light signal corresponding to the pixel, which may provide information related to the zenith angle, *θ* of the light signal corresponding to the pixel.

One or more assumptions may be made in the computation of surface normals and in shape reconstruction of an object 104 in the scene 102, which may include but is not limited to assuming that the light incident on the object before reflection is unpolarized, assuming specular dominant or diffuse dominant reflection, assuming the refractive index of the object is wavelength independent and the refractive index of the air space as one, assuming the object is a dielectric or a metal, assuming specific conditions regarding a concavity or convexity of an object, assuming that the object exhibits a smooth surface structure, and assuming that the surface is composed of planar microfacets of random or specific orientations.

The shape estimation processor 130 may be a hardware apparatus, like for example, a processor, a microprocessor, a programmable computer or an electronic circuit. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the shape estimation processor may be a custom circuit, an application-specific integrated circuit (ASIC), or the like.

Shape from Polarization (SfP) techniques may follow rule-based methods or algorithms applying physics principles and polarization related equations and measurements. Such methods may produce uncertainties or errors related to polarization measurement and the detection of events.

Inevitable imperfections in the material of linear polarizers may lead to a range in quality. One measure of quality in a linear polarizer is how well the perpendicular axes of maximal and minimal intensity transmission for various light signals are aligned with a 90° angle. Another measure of quality in a linear polarizer is its polarization extinction ratio (PER), which is a measure of the degree to which light is confined in a principal linear polarization mode. It is defined as the ratio of the power of the principal polarization mode to the power of the orthogonal polarization mode after propagation through a device or system, usually expressed in decibels (dB). $PER = 10 {log}_{10} \frac{{P}_{principal}}{{P}_{arthogonal}} \left(dB\right)$

The extinction ratio of a more common linear polarizer can range from -30 to -40 dB (a ratio of 1000: 1 to 10,000:1 between P*_{principal}* and P*_{orthogonal}*)*,* while specially made linear polarizers can have a PER even greater than -60 dB (a ratio of 1,000,000: 1). Regardless of how high the PER, uncertainty and/or errors may be produced in polarization measurements.

In addition, linear polarizer 110 cannot distinguish between two rotation angles separated by a rotation of 180°. This leads to two different forms of measuring the same rotation angle. This also leads to two maxima and minima in intensity after a full rotation of 360° of the linear polarizer 110. One may also note that for each pixel of the EVS 120 within a full rotation of 360°, there are two rotation angles to trigger an ON-event and two rotation angles to trigger an OFF-event, based on the 180° ambiguity of a linear polarizer.

While the EVS 120 offers a significant improvement with a higher time-resolution and a lower latency compared to other cameras, it may exhibit imperfections that lead to uncertainties or errors related to the detection of events.

Limitations of performance of EVS 120 may be caused by latency, jitter and noise sources. Currently, available EVS have a minimum possible temporal resolution of 1 µs. However, in practice, latency, transistor noise and variable readout delays become jitter and noise sources in the data, which may decrease the precision of the event timestamping. Such non-idealities are design- and manufacturer-specific. Latency may be defined as the time it takes for an event to be registered since the moment the logarithmic change in intensity exceeds the threshold. It can currently range on average from a few microseconds to hundreds of milliseconds, depending on bias settings, manufacturing process and illumination level. Transistor noise may be defined as the random transistor noise of the circuits, which may also depend on settings and illumination. This noise randomly changes the measured signal, leading to threshold-comparison jitter.

Other non-idealities may encompass parasitic photocurrents and junction leakages, as these effects bias event generation to one specific polarity. Read-out architectures may be arbitrated architectures, which preserve or partially preserve the order of the pixels' firing. They may lead to significant queuing delays before the timestamping operation. This may be particularly noticeable when the number of active pixels (and resolution) scale up. Scanning readouts, on the other hand, may limit the possible delays by sacrificing event timing resolution. Jitter may be defined as the random variation that appears in timestamps. It may depend on all of the aforementioned factors, all of which increase the unpredictability and imprecision of the event timing.

Given the multipole ambiguities and variables, particularly for non-Lambertian surfaces, the process to solve for a surface normal can be computationally cumbersome and dependent on further information. In addition to algorithms relying on a rule-based method, solving polarization related equations, the shape estimation processor 130 may also rely on end-to-end machine learning.

The shape estimation processor 130 may comprise a trained machine-learning network configured to predict one or more surface normals 132 of the scene 102 based on a plurality of predefined rotation angles of the linear polarizer and respective events associated with the plurality of predefined rotation angles of the linear polarizer 110.

The trained machine-learning network may accept input including polarization information. The polarization information may include one or more sets of polarization-based events 122, each corresponding to a rotation angle of the linear polarizer 110. The polarization-based events 122 may be one or more 2-dimensional pixel arrays, each depicting a map of ON and OFF-events, with each pixel array associated with a rotation angle of the linear polarizer 110. The trained machine learning network may accept an input including a surface normal estimation or a refined surface normal estimation after one or more rounds of acts S401 to S404. It may accept ambiguous normal maps depicting surface normal information 132 of one or more objects 104 produced by the shape estimation processor 130. The ambiguous normal maps may be a 2-dimensional pixel array, wherein a pixel is either encoded with a surface normal vector, or the pixel is not encoded with information. The surface normal vector may have a corresponding zenith angle and azimuth angle encoded. The ambiguous normal maps may include ambiguous solutions to a diffuse dominant or specular dominant model of reflection. The surface normal information 132 may include two physical solutions for a zenith angle in the specular dominant model.

The trained machine-learning network may be trained how to combine the polarization information with one or more ambiguous normal maps. The polarization information and one or more ambiguous maps may be provided as input to a prediction model, which may be configured to predict one or more surface normal of the scene 102. The predicted surface normal may be based on the polarization information and one or more ambiguous normal maps.

The trained machine-learning network may be a convolutional neural network (CNN), which may comprise a surface normal reconstruction network. The surface normal reconstruction network may comprise a convolutional encoder, a downsampling unit, an upsampling unit, and a decoder to output machine-learning network estimated normals for one or more objects.

The CNN may comprise one or more convolutional layers, which may perform a convolution, or a linear operation that includes a weighted multiplication on input data. The weighted multiplication may be performed by a 2-dimensional array of weights on a 2-dimensional array of data.

The convolutional encoder may be configured to extract high-level features of one or more objects from the polarization-based information and ambiguous normal maps. The encoder may provide data related to extracted high-level features of one or more objects to a downsampling unit. The downsampling unit may perform instance normalization, contrast normalization, intensity normalization, or batch normalization. Normalization may include re-centering or re-scaling of image layer inputs. The downsampling unit may generate an output, which may be provided to an upsampling unit. The upsampling unit may apply a resizing of one or more images, which may be based on surface normal information 132 or ambiguous normal maps, and a spatially adaptive normalization (SPADE). The SPADE may be a conditional normalization method of a normalization technique for semantic image synthesis with an input semantic layout. A semantic image may be an image partitioned into regions labeled with a category, which may delineate meaningful objects or features. The SPADE may minimize the loss of semantic information from one or more input layers. The upsampling unit may generate an output, which may include one or more estimated normal vectors and, which may be provided to a final layer or a decoder. The final layer or decoder may generate an output image of one or more objects based on the reconstructed surface normal information 132. The estimated surface normals may be normalized to a unit length.

The trained machine-learning network may be configured to use prior knowledge related to shape or other physical properties of objects 104 in the scene 102 and/or statistical shape knowledge based on a training with a real or synthetic dataset. It may be trained how to combine both polarization information, ambiguous normal maps, and statistical shape knowledge to effectively perform shape estimation. Other prior knowledge related to objects 104 in the scene 102 may include statistical knowledge related to object speed and motion patterns.

The shape estimation processor 130 may comprise a machine-learning network, wherein the machine-learning network is configured to implement a supervised learning algorithm.

The supervised learning algorithm can be used for a training of the machine-learning network. The machine-learning network may be trained with various training data. The training data may be labeled, including labeled inputs and outputs. The training data may comprise polarization information, including one or more sets of polarization-based events 122 and corresponding rotation angles, simulated ambiguous normal maps, and ground truth surface normal data. The ambiguous normal maps may include solutions to a diffuse model and solutions to a specular model.

The training data may comprise real data and/or simulated data. The real and simulated data may comprise one or more sets of events. The one or more sets of events may be depicted as 2-dimensional pixel arrays of ON and OFF-events. Real data may provide polarization-based images, images from a standard stereo camera setup, ground truth camera poses, depth maps derived from a LiDAR, or optic flow maps.

Simulated data may be in the form of events. It may be produced without a continuous representation of a visual signal by a sampling of the frames of the visual signal at a high framerate synchronously, and then performing linear interpolation to reconstruct a piecewise linear approximation of the continuous visual signal. Frames may be sample uniformly or adaptively, based on predicted dynamics of the visual signal. The adaptive sampling may be performed according to changes in intensity of a light signal and pixel displacement, which may be caused by a motion of an object, A generation of data including adaptive sampling may generate event-information that may be used to train the machine-learning network.

The supervised learning algorithm may perform data mining, including classification to assign the data into specific categories, and regression, including linear regression models, logistic regression models, and polynomial regression models. The machine-learning network can learn to minimize the difference between the reconstructed depth computer from polarization-based events 122 and ground truth surface normal data.

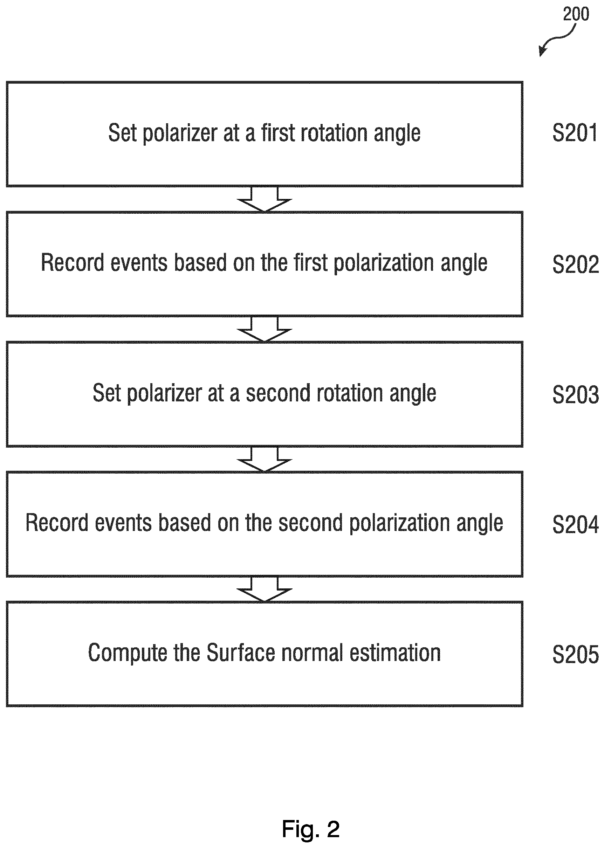

**Fig. 2** summarizes the proposed concept by illustrating a flowchart of a method 200 for shape measurement of a scene 102 based on the present disclosure.

Method 200 may begin with an act S201 of rotating the linear polarizer to a first rotation angle. After the polarizer has been set to the first rotation angle, method 200 may then proceed with act S202 of detecting a first set of events. The detection of events by the EVS 120 in S202 may correspond to the first rotation angle of the linear polarizer 110.

The detection of events in S202 may include a reference rotation angle of the linear polarizer 110 chosen as a basis of comparison. Events may be recorded based on a change in intensity, wherein the intensity at the rotation angle corresponding to the first detection of events is compared with the intensity at the reference rotation angle.

Method 200 may then proceed with act S203 of rotating the polarizer angle to a second rotation angle, which may then be followed by act S204 of detecting a second set of events corresponding to the second rotation angle of the linear polarizer 110.

The second set of events may be based on a change in intensity, wherein the intensity of the corresponding rotation angle is compared with the intensity of the first rotation angle. The second set of events may be based on a change in intensity, wherein the intensity of the corresponding rotation angle is compared with the intensity of the reference angle or a newly chosen reference angle different from the reference angle or the first rotation angle of the linear polarizer 110. The reference angle chosen as a basis of comparison may be the same angle as the first rotation angle of the linear polarizer 110, for which the previously recorded events corresponded to, or it may be a different angle therefrom.

In the final act of method 200, act S205 computes a surface normal estimation of one or more objects 104 in the scene 102, based on the first and second set of events provided by the EVS 120 and the first and second rotation angles of the linear polarizer 110 corresponding to the first and second set of events, respectively.

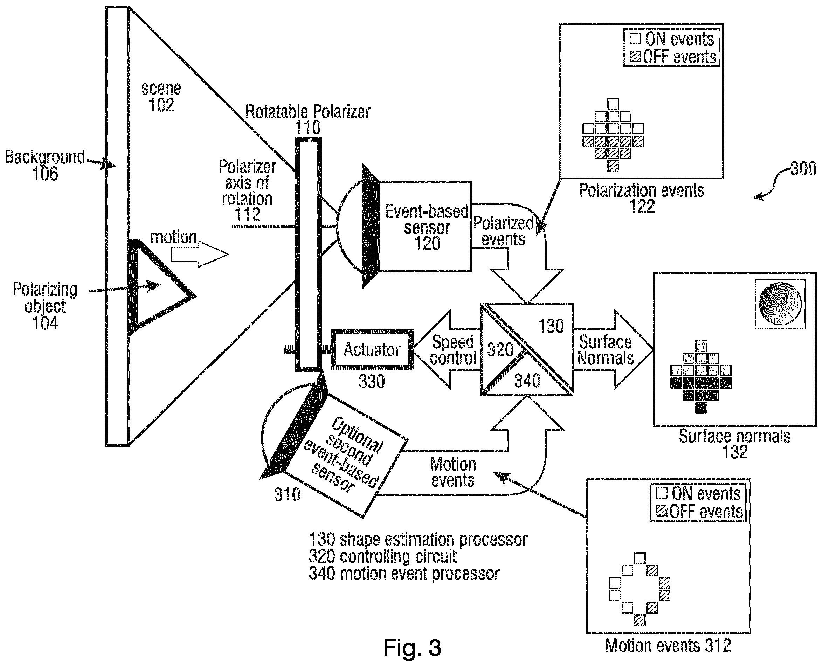

**Fig. 3** schematically illustrates a second embodiment of the apparatus 100 for shape measurement of a scene 102 based on the present disclosure.

Apparatus 300 comprises a rotatable polarizer 110, an EVS 120, and a shape estimation processor 130, and further comprises a second EVS 310, configured to detect one or more areas of motion in the scene 102, and a controlling circuit 320, configured to control a rotational speed of the linear polarizer based on information from the one or more areas of motion detected by the second EVS.

The motion in the scene 102 may be relative to the background or relative to another static or moving object in the scene 102. The motion may be in any direction with respect to the second EVS, which is detected when the motion is in an area within the field of view of the second EVS. The one or more areas of motion in the scene 102 may be recorded by the second EVS 310 as a set of events or motion events 312. Events produced by the second EVS 310 may be tuned to detect temporal changes in the brightness of the scene 102. These motion events 312 may effectively locate moving objects in the scene 102, which are associated with regions of interest.

The motion events 312 detected by the second EVS 310 may be provided to a motion event processor 340. The motion event processor 340 may read the motion events 312 and convert the motion event information 312 to information that can be used by the controlling circuit 320 to control the rotational speed of the linear polarizer 110.

For this purpose, the controlling circuit 320 may be coupled with a controllable actuator 330 configured to cause the linear polarizer 110 to rotate. The actuator 330 and its interaction with the linear polarizer 110 may come in various example implementations as described in Fig. 1, including but not limited to an electric drive/motor. The controlling circuit 320 may be configured to control the electric drive/motor to rotate the linear polarizer 110 via a gear or a belt based on information provided by the motion events 312.

In an alternative embodiment, the motion events 312 detected by the second EVS 310 may be provided to a second digital signal processor, which may read the motion events 312 and provide them to a controlling circuit 320 to control a rotational speed of the linear polarizer 110. The shape estimation processor 130 may process events generated by the first EVS only or it may process events generated by both the first EVS and the second EVS. The controlling circuit 320 and motion event processor 340 may each be built as a separate structure or may be included in the same structure of the estimation processor 130.

The controlling circuit 320 may be configured to control the rotational speed of the linear polarizer 110 based on motion events 312 generated by the second EVS 310 in a predefined time interval. The controlling circuit 320 may be configured to increase the rotational speed of the linear polarizer 110 when an amount of motion detected by the second EVS increases and to decrease the rotational speed of the linear polarizer 110 when the amount of motion detected by the second EVS decreases.

The controlling circuit 320 may be configured to keep a record of time in units of a predefined time interval. The second EVS 310 may be configured to record a set of motion events 312 that occur within a corresponding unit of the predefined time interval and it may be configured to store the set of motion events separately from other recorded sets of motion events corresponding to subsequent units of the predefined time interval. The controlling circuit 320 may be configured to control the rotational speed directly based on the number of motion events generated 312 by the second EVS 310 recorded as one or more sets of motion events 312. The rotational speed may be based on an average of the number motion events calculated for multiple sets of motion events. The average may be calculated with weighting factors for specific sets of motion events.

The controlling circuit 320 may be configured to increase or decrease the rotational speed of the linear polarizer 110 in direct proportionality to an increase or decrease in the number of events generated by the second EVS within the corresponding unit of the predefined time interval, respectively. In other words, the speed of the motor can be adapted depending on an activity of motion in the scene. The controlling circuit 320 may be configured to apply any mathematical function on an input of a number of motion events 312 recorded within one or more units of the predefined time interval, in order to generate an output of a desired rotational speed of the linear polarizer 110.

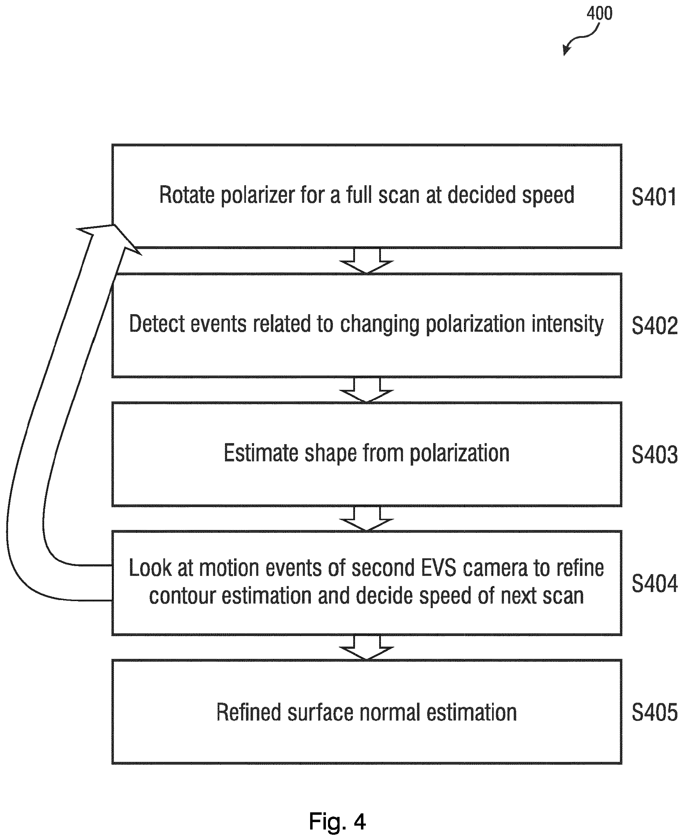

**Fig. 4** summarizes the proposed concept of the apparatus 300 by illustrating a flowchart of a method 400 for shape measurement of a scene 102 based on the present disclosure.

Method 400 begins with an act S401 of rotating the linear polarizer at a decided speed to be used for a full scan. A full scan may be a process that includes two or more rotation angles of the linear polarizer 110 and a detection of events corresponding to the two or more rotation angles.

A decided speed may be manually chosen or chosen among a list of various default settings. A full scan may include a reference rotation angle of the linear polarizer 110 chosen as a basis of comparison. The reference angle may be used for the first detection of events, as described in S201 and S202. Events may be recorded based on a change in intensity, wherein the intensity at the rotation angle corresponding to the first detection of events is compared with the intensity at the reference angle. Events recorded based on a corresponding rotation angle of the linear polarizer 110 may be based on a change in intensity, wherein the intensity of the the corresponding rotation angle is compared with the intensity of a reference angle. The reference angle chosen as a basis of comparison may be the same angle as the rotation angle, for which the previously recorded events corresponded to, or it may be a different angle therefrom.

In the following act S402 a full scan may be conducted, wherein two or more rotation angles of the linear polarizer 110 are chosen and two or more corresponding sets of events, or polarization events 122, may be detected by the EVS 120. The set of polarization events 122 generated by the EVS 120 may be based on a change in intensity, in which the intensity of a light signal passed from the scene 102 through the linear polarizer 110 at the current rotation angle is compared with the intensity of a light signal passed from the scene 102 through the linear polarizer 110 at the previously chosen rotation angle or with that of a reference angle. Concurrently, the second EVS may record one or more areas of motion in the scene 102 to generate a set of motion events 312 corresponding to a unit of a predefined time interval. The predefined time interval may be chosen in anticipation of an expected speed of an object in motion. The predefined time intervals may also vary within a scan to test which predefined time interval provides a suitable number of motion events 312 and can distinguish motion better compared to shorter or longer predefined time intervals.

In the following act S403, the shape estimation processor 130 may perform a shape estimation to generate a set of surface normals 132 based on the two or more sets of polarization-based events 122 and the corresponding rotation angles of the linear polarizer 110. The shape estimation may perform quantitative measurements and qualitative analyses of one or more output variables, including but not limited to mean angular error, robustness to texture-copy, and lighting invariance.

The mean angular error is a mean of all angular errors, with one recorded for each estimation of a surface normal. It communicates a distribution of the estimation results and how much error is expected. Texture-copy may be seen in a shape reconstruction when a color variation masquerades as a geometric variation, leading to a slightly different shape estimation as would be without the color variation. A shape estimation process shows lighting invariance if the same shape estimation is produced under varied lighting conditions, such as with different light intensities in the background or originating from different directions toward the object.

In the following act S404, the motion events 312 generated by the second EVS 310 may be provided to the shape estimation processor 130. The shape estimation processor 130 may then perform a refined contour estimation based on the polarization events 122 and the corresponding rotation angles of the linear polarizer 110, as well as the motion events 312 of one or more predefined time intervals. The information used to perform the refined contour estimation may also be used to increase or decrease the rotational speed of the linear polarizer 110 for the next scan. This enables an adaptive mode, which can respond to motion detected in the scene 102. For example, the rotational speed of the linear polarizer 110 may be increased or decreased if the number of motion events 312 is too low or high, respectively. This may lead to the detection of a more suitable number of polarization events 122 for the corresponding rotational angles of the linear polarizer 110. The suitable number of polarization events may be a predetermined range that corresponds to a greater probability to obtain a surface normal estimation of an acceptable accuracy. The accuracy of the surface normal estimation may be measured in one or more quantitative or qualitative variable outputs, including but not limited to mean angular error, robustness to texture-copy, and lighting invariance.

If the accuracy of the surface normal estimation is not deemed acceptable by the shape estimation processor 130, then an increase or decrease for the rotational speed of the linear polarizer 110 may be chosen depending on whether the number of motion events 132 recorded was too high or too low.

The linear polarizer 110 may be made to rotate at a newly chosen rotational speed higher or lower than the previously chosen rotational speed. The controlling circuit 320 may cause the actuator 330 that is connected to the linear polarizer to rotate, such that the linear polarizer rotates at its newly chosen speed. Step S402 may be repeated, but with the linear polarizer 110 rotating at the newly chosen rotational speed. Step S403 may then be repeated, but with the surface estimation performed based on new sets of polarization events 122 generated by the EVS 120 based on the linear polarizer 110 rotating at the newly chosen rotational speed. S404 may then be repeated to perform a new refined contour estimation, whereby the shape estimation processor 130 determines whether the refined contour estimation is of an acceptable accuracy.

Acts S401 through S404 may be repeated until the shape estimation processor 130 performs a refined contour estimation, such that the refined contour estimation is of an acceptable accuracy. Also, if the second EVS 310 detects no motion from the scene, thus providing no new surface normal information 132, the refined contour estimation may be classified as having an acceptable accuracy to prevent further rounds of shape estimation. This can save power for the apparatus 100 or 300. When this condition is met, act S405 is performed, wherein a final refined surface normal estimation is performed based on the most recently recorded sets of polarization events 122 and the corresponding rotation angles of the linear polarizer 110, generated with the linear polarizer 110 rotating at the most recently chosen rotational speed, and also based on the most recent refined contour estimation of S404.

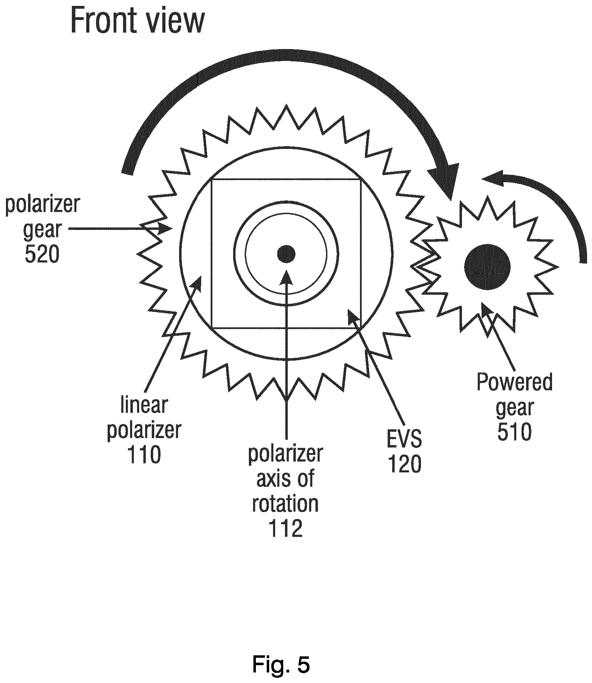

**Fig. 5** schematically illustrates a further embodiment of the actuator 330 and the linear polarizer 110 based on the present disclosure.

The controlling circuit 320 may comprise a powered gear for rotating the linear polarizer.

In Fig. 5, a powered gear 510 is shown, configured to rotate the linear polarizer 110. The powered gear may be connected to an electric drive/motor and may comprise a rotor to rotate along a rotational axis. The powered gear 510 may be configured to rotate clockwise or counterclockwise. The powered gear 510 may be in interface edge contact with a second gear 520. The second gear 520 may be in edge interface contact with further gears. The second gear 520 may be installed in apparatus 100 or 300, such that a rotation of the second gear 520 causes a rotation in the opposite direction or the same direction for the linear polarizer 110.

The second gear 520 may provide a housing for the linear polarizer 110, such that a rotation of the second gear 520 causes a stable rotation of the linear polarizer 110 and maintains a stable alignment of the linear polarizer 110 with the field of view of the EVS 120.

The controlling circuit 320 of apparatus 300 may be coupled to the powered gear 510 to rotate the powered gear 510 at a chosen rotational speed. The rotational speed of the powered gear 510 may be chosen, such that it causes the second gear 520, a gear housing the linear polarizer 110 and/or the linear polarizer 110 to rotate at a desired rotational speed, as outlined in S401 and S404 of method 400.

Note that the present technology can also be configured as described below.

Example 1 is an apparatus for shape measurement of a scene. The apparatus comprises a rotatable linear polarizer configured to pass light from the scene at a first rotation angle of the linear polarizer and to subsequently pass light from the scene at a second rotation angle of the linear polarizer. It further comprises an event-based vision sensor, EVS, configured to detect a first set of events associated with the passed light of the first rotation angle of the linear polarizer and to subsequently detect a second set of events associated with the passed light of the second rotation angle of the linear polarizer. It further comprises a shape estimation processor configured to compute surface normal information of the scene based on the first and second set of events and the corresponding first and second rotation angles of the linear polarizer.

In Example 2, the apparatus of Example 1 further optionally comprises a second EVS configured to detect one or more areas of motion in the scene, and a controlling circuit configured to control a rotational speed of the linear polarizer based on information from the one or more areas of motion detected by the second EVS.

In Example 3, the apparatus of Example 2 further optionally comprises a controlling circuit, wherein the controlling circuit is configured to control the rotational speed of the linear polarizer based on a number of events generated by the second EVS in a predefined time interval.

In Example 4, the apparatus of Example 3 further optionally comprises a controlling circuit, wherein the controlling circuit is configured to increase the rotational speed of the linear polarizer when an amount of motion detected by the second EVS increases and to decrease the rotational speed of the linear polarizer when the amount of motion detected by the second EVS decreases.

In Example 5, the apparatus of any one of Examples 2 to 4 further optionally comprises a controlling circuit, wherein the controlling circuit comprises a powered gear for rotating the linear polarizer.

In Example 6, the apparatus of any one of the previous Examples further optionally comprises a shape estimation processor, wherein the shape estimation processor is configured to compute an orientation of one or more surface normals of a portion of the scene based on a change in intensity of passed light between the first and second rotation angles of the linear polarizer that triggered the EVS to output an event associated with the portion.

In Example 7, the apparatus of any one of the previous Examples further optionally comprises a shape estimation processor, wherein the shape estimation processor comprises a trained machine-learning network configured to predict one or more surface normals of the scene based on a plurality of predefined rotation angles of the linear polarizer and respective events associated with the plurality of predefined rotation angles of the linear polarizer.

In Example 8, the apparatus of Example 7 further optionally comprises a machine-learning network, wherein the machine-learning network is configured to implement a supervised learning algorithm.

Example 9 is a method for shape measurement of a scene, the method comprising passing light from the scene at a first rotation angle of a rotatable linear polarizer, detecting, with an EVS, a first set of events associated with the passed light of the first rotation angle of the linear polarizer, passing light from the scene at a second rotation angle of the linear polarizer, detecting, with the EVS, a second set of events associated with the passed light of the second rotation angle of the linear polarizer, and computing surface normal information of one or more objects in the scene based on the first and second set of events and the corresponding first and second rotation angles of the linear polarizer.

To summarize, embodiments of the present disclosure propose an event-based surface normal estimation setup or sensor. Events are produced by an Event-based Vision Sensor (EVS) tuned to detect temporal changes in the scene light signal. These are created by periodically filtering the polarization information of the scene with a fast-rotating polarizer. With an algorithm, surface normal information are then retrieved from the event-based information and depth is estimated. The rotational speed of the polarizer may be adapted to the scene activity.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. Apparatus (100, 300) for shape measurement of a scene (102), the apparatus (100, 300) comprising
a rotatable linear polarizer (110) configured to pass light from the scene (102) at a first rotation angle of the linear polarizer (110) and to subsequently pass light from the scene (102) at a second rotation angle of the linear polarizer;
an event-based vision sensor, EVS (120), configured to detect a first set of events (122) associated with the passed light of the first rotation angle of the linear polarizer (110) and to subsequently detect a second set of events (122) associated with the passed light of the second rotation angle of the linear polarizer;
a shape estimation processor (130) configured to compute surface normal information (132) of the scene (102) based on the first and second set of events (122) and the corresponding first and second rotation angles of the linear polarizer.

2. The apparatus (300) of claim 1, further comprising
a second EVS (310) configured to detect one or more areas of motion in the scene (102); and
a controlling circuit (320) configured to control a rotational speed of the linear polarizer (110) based on information from the one or more areas of motion detected by the second EVS (310).

3. The apparatus (300) of claim 2, wherein the controlling circuit (320) is configured to control the rotational speed of the linear polarizer (110) based on a number of events (312) generated by the second EVS (310) in a predefined time interval.

4. The apparatus (300) of claim 3, wherein the controlling circuit (320) is configured to increase the rotational speed of the linear polarizer (110) when an amount of motion detected by the second EVS increases and to decrease the rotational speed of the linear polarizer (110) when the amount of motion detected by the second EVS decreases.

5. The apparatus (300) of any one of claims 2 to 4, wherein the controlling circuit (320) comprises a powered gear (510) for rotating the linear polarizer (110).

6. The apparatus (100, 300) of any one of the previous claims, wherein the shape estimation processor (130) is configured to compute an orientation of one or more surface normals (132) of a portion of the scene (102) based on a change in intensity of passed light between the first and second rotation angles of the linear polarizer (110) that triggered the EVS (120) to output an event (122) associated with the portion.

7. The apparatus (100, 300) of any one of the previous claims, wherein the shape estimation processor (130) comprises a trained machine-learning network configured to predict one or more surface normals (132) of the scene (102) based on a plurality of predefined rotation angles of the linear polarizer (110) and respective events (122) associated with the plurality of predefined rotation angles of the linear polarizer (110).

8. The apparatus (100, 300) of claim 7, wherein the machine-learning network is configured to implement a supervised learning algorithm.

9. Computer-implemented method (200, 400) for shape measurement of a scene (102), the method comprising
passing light from the scene (102) at a first rotation angle of a rotatable linear polarizer (110);
detecting, with an event-based vision sensor, EVS (120), a first set of events (122) associated with the passed light of the first rotation angle of the linear polarizer (110);
passing light from the scene (102) at a second rotation angle of the linear polarizer (110);
detecting, with the EVS (120), a second set of events (122) associated with the passed light of the second rotation angle of the linear polarizer (110);
computing surface normal information of one or more objects in the scene (102) based on the first and second set of events (122) and the corresponding first and second rotation angles of the linear polarizer (110).

## Patentansprüche

1. Einrichtung (100, 300) zur Formmessung einer Szene (102), wobei die Einrichtung (100, 300) Folgendes umfasst
einen drehbaren linearen Polarisator (110), der konfiguriert ist, um Licht aus der Szene (102) bei einem ersten Drehwinkel des linearen Polarisators (110) passieren zu lassen und anschließend Licht aus der Szene (102) bei einem zweiten Drehwinkel des linearen Polarisators passieren zu lassen;
einen ereignisbasierten Vision-Sensor, EVS (120), der konfiguriert ist, um einen ersten Satz von Ereignissen (122) zu erfassen, die mit dem passierten Licht des ersten Drehwinkels des linearen Polarisators (110) assoziiert sind, und anschließend einen zweiten Satz von Ereignissen (122) zu erfassen, die mit dem passierten Licht des zweiten Drehwinkels des linearen Polarisators assoziiert sind;
ein Formschätzungsprozessor (130), der konfiguriert ist, um Oberflächennormaleninformationen (132) der Szene (102) basierend auf dem ersten und zweiten Satz von Ereignissen (122) und den entsprechenden ersten und zweiten Drehwinkeln des linearen Polarisators zu berechnen.

2. Einrichtung (300) nach Anspruch 1, ferner umfassend
einen zweiten EVS (310), der konfiguriert ist, um einen oder mehrere Bewegungsbereiche in der Szene (102) zu erfassen; und
eine Steuerschaltung (320), die konfiguriert ist, um eine Drehzahl des linearen Polarisators (110) basierend auf Informationen aus dem einen oder den mehreren durch den zweiten EVS (310) erfassten Bewegungsbereichen zu steuern.

3. Einrichtung (300) nach Anspruch 2, wobei die Steuerschaltung (320) konfiguriert ist, um die Drehgeschwindigkeit des linearen Polarisators (110) basierend auf einer Anzahl von Ereignissen (312) zu steuern, die von dem zweiten EVS (310) in einem vorgegebenen Zeitintervall erzeugt werden.

4. Einrichtung (300) nach Anspruch 3, wobei die Steuerschaltung (320) konfiguriert ist, um die Drehgeschwindigkeit des linearen Polarisators (110) zu erhöhen, wenn ein durch den zweiten EVS erfasster Bewegungsbetrag zunimmt, und die Drehgeschwindigkeit des linearen Polarisators (110) zu verringern, wenn der durch den zweiten EVS erfasste Bewegungsbetrag abnimmt.

5. Einrichtung (300) nach einem der Ansprüche 2 bis 4, wobei die Steuerschaltung (320) ein angetriebenes Zahnrad (510) zum Drehen des linearen Polarisators (110) umfasst.

6. Einrichtung (100, 300) nach einem der vorstehenden Ansprüche, wobei der Formschätzungsprozessor (130) konfiguriert ist, um eine Ausrichtung einer oder mehrerer Oberflächennormalen (132) eines Abschnitts der Szene (102) basierend auf einer Änderung der Intensität von passiertem Licht zwischen den ersten und zweiten Drehwinkeln des linearen Polarisators (110) zu berechnen, die den EVS (120) dazu veranlasst hat, ein Ereignis (122) auszugeben, das mit dem Abschnitt assoziiert ist.

7. Einrichtung (100, 300) nach einem der vorstehenden Ansprüche, wobei der Formschätzungsprozessor (130) ein trainiertes Netzwerk für maschinelles Lernen umfasst, das konfiguriert ist, um eine oder mehrere Oberflächennormalen (132) der Szene (102) basierend auf einer Vielzahl von vorgegebenen Drehwinkeln des linearen Polarisators (110) und jeweiligen Ereignissen (122), die mit der Vielzahl von vorgegebenen Drehwinkeln des linearen Polarisators (110) assoziiert sind, vorherzusagen.

8. Einrichtung (100, 300) nach Anspruch 7, wobei das Netzwerk für maschinelles Lernen konfiguriert ist, um einen überwachten Lernalgorithmus zu implementieren.

9. Computerimplementiertes Verfahren (200, 400) zur Formmessung einer Szene (102), wobei das Verfahren umfasst
Passierenlassen von Licht aus der Szene (102) bei einem ersten Drehwinkel eines drehbaren linearen Polarisators (110);
Erfassen, mit einem ereignisbasierten Vision-Sensor, EVS (120), eines ersten Satzes von Ereignissen (122), die mit dem passierten Licht des ersten Drehwinkels des linearen Polarisators (110) assoziiert sind;
Passierenlassen von Licht aus der Szene (102) bei einem zweiten Drehwinkel des linearen Polarisators (110);
Erfassen, mit dem EVS (120), eines zweiten Satzes von Ereignissen (122), die mit dem passierten Licht des zweiten Drehwinkels des linearen Polarisators (110) assoziiert sind;
Berechnen von Oberflächennormaleninformationen eines oder mehrerer Objekte in der Szene (102) basierend auf dem ersten und zweiten Satz von Ereignissen (122) und den entsprechenden ersten und zweiten Drehwinkeln des linearen Polarisators (110).

## Revendications

1. Appareil (100, 300) destiné à une mesure de forme d'une scène (102), l'appareil (100, 300) comprenant
un polariseur linéaire (110) rotatif configuré pour laisser passer de la lumière provenant de la scène (102) à un premier angle de rotation du polariseur linéaire (110) et laisser passer ensuite de la lumière provenant de la scène (102) à un second angle de rotation du polariseur linéaire ;
un capteur de vision en fonction d'événement, EVS (120), configuré pour détecter un premier ensemble d'événements (122) associés à la lumière passée du premier angle de rotation du polariseur linéaire (110) et pour détecter ensuite un second ensemble d'événements (122) associés à la lumière passée du second angle de rotation du polariseur linéaire ;
un processeur d'estimation de forme (130) configuré pour calculer des informations de normale à la surface (132) de la scène (102) en fonction des premier et second ensembles d'événements (122) et des premier et second angles de rotation correspondants du polariseur linéaire.

2. Appareil (300) selon la revendication 1, comprenant en outre
un second EVS (310) configuré pour détecter une ou plusieurs zones de mouvement dans la scène (102) ; et
un circuit de commande (320) configuré pour commander une vitesse de rotation du polariseur linéaire (110) en fonction d'informations provenant de la ou des zones de mouvement détectées par le second EVS (310).

3. Appareil (300) selon la revendication 2, dans lequel le circuit de commande (320) est configuré pour commander la vitesse de rotation du polariseur linéaire (110) en fonction d'un nombre d'événements (312) générés par le second EVS (310) dans un intervalle de temps prédéfini.

4. Appareil (300) selon la revendication 3, dans lequel le circuit de commande (320) est configuré pour augmenter la vitesse de rotation du polariseur linéaire (110) lorsqu'une quantité de mouvement détectée par le second EVS augmente et pour diminuer la vitesse de rotation du polariseur linéaire (110) lorsque la quantité de mouvement détectée par le second EVS diminue.

5. Appareil (300) selon l'une quelconque des revendications 2 à 4, dans lequel le circuit de commande (320) comprend un engrenage alimenté en puissance (510) permettant de mettre en rotation le polariseur linéaire (110).

6. Appareil (100, 300) selon l'une quelconque des revendications précédentes, dans lequel le processeur d'estimation de forme (130) est configuré pour calculer une orientation d'une ou plusieurs normales à la surface (132) d'une partie de la scène (102) en fonction d'un changement d'intensité de lumière passée entre les premier et second angles de rotation du polariseur linéaire (110) qui ont déclenché l'EVS (120) pour délivrer en sortie un événement (122) associé à la partie.

7. Appareil (100, 300) selon l'une quelconque des revendications précédentes, dans lequel le processeur d'estimation de forme (130) comprend un réseau d'apprentissage automatique entraîné configuré pour prédire une ou plusieurs normales à la surface (132) de la scène (102) en fonction d'une pluralité d'angles de rotation prédéfinis du polariseur linéaire (110) et d'événements respectifs (122) associés à la pluralité d'angles de rotation prédéfinis du polariseur linéaire (110).

8. Appareil (100, 300) selon la revendication 7, dans lequel le réseau d'apprentissage automatique est configuré pour implémenter un algorithme d'apprentissage supervisé.

9. Procédé implémenté par ordinateur (200, 400) destiné à une mesure de forme d'une scène (102), le procédé comprenant
le passage de lumière provenant de la scène (102) à un premier angle de rotation d'un polariseur linéaire (110) rotatif ;
la détection avec un capteur de vision en fonction d'événement, EVS (120), d'un premier ensemble d'événements (122) associés à la lumière passée du premier angle de rotation du polariseur linéaire (110) ;
le passage de lumière provenant de la scène (102) à un second angle de rotation du polariseur linéaire (110) ;
la détection, avec l'EVS (120), d'un second ensemble d'événements (122) associés à la lumière passée du second angle de rotation du polariseur linéaire (110) ;
le calcul d'informations de normale à la surface d'un ou plusieurs objets dans la scène (102) en fonction des premier et second ensembles d'événements (122) et des premier et second angles de rotation correspondants du polariseur linéaire (110).
